# EUROPEAN PATENT APPLICATION

(11) **EP 3 101 822 A1**
(43) Date of publication of application: **07.12.2016**
(21) Application number: 15743012.5
(22) Date of filing: 29.01.2015
(51) Int. Cl.: H04B 7/26

(54) **CONTROL CHANNEL TRANSMISSION DEVICE AND METHOD IN FREQUENCY INTEGRATED SYSTEM**

(30) Priority: 29.01.2014 KR 20140011691
(71) Applicant: Samsung Electronics Co., Ltd., Gyeonggi-do 16677 (KR)
(72) Inventor: CHOI, Seung-Hoon, Suwon-si Gyeonggi-do 443-756 (KR); JI, Hyoung-Ju, Seoul 138-908 (KR); KIM, Young-Bum, Seoul 130-794 (KR)
(74) Representative: HGF Limited
(86) International application number: PCT/KR2015/001004
(87) International publication number: WO 2015/115855

(57) **Abstract**

Disclosed are a device and a method for transmitting control information in a base station the supports a high-speed data service for a primary cell (PCell) area and a secondary cell (SCell) area. To this end, control information is generated according to a format which is determined by considering a primary duplex mode supported in the PCell area and a secondary duplex mode supported in the SCell area. The generated control information is transmitted to a downlink control channel. The primary duplex mode and the secondary duplex mode correspond to either a frequency division duplex (FDD) mode or a time division duplex (TDD) mode so as to be different from each other.

## Description

### [TECHNICAL FIELD]

The present disclosure relates to apparatuses and methods for transmitting control channels in carrier aggregation systems.

### [BACKGROUND ART]

Generally, mobile communication systems may provide voice services and high-speed data communication services based on wireless resources. Long term evolution (LTE), LTE-advanced (LTE-A) or other high-speed data communication services have come to the market.

Wireless resources are a critical factor to determine a data rate in the high-data communication service. Accordingly, there is prepared a scheme to efficiently utilize limited wireless resources to raise data transmission speed.

An example is carrier aggregation (CA). CA is a technique that groups and manages different frequency bands. For example, in the case where there are five component carriers (CCs), i.e., carrier frequency bands each having a bandwidth of 20MHz, CA bundles up the five CCs to enable use of a bandwidth of 100MHz.

CA may also be applicable to heterogeneous duplex schemes. An example is frequency division duplex (FDD)-time division duplex (TDD) LTE CA. The FDD-TDD LTE CA scheme combines the TDD scheme and the FDD scheme to increase data rate.

### [SUMMARY]

The FDD-TDD LTE CA scheme assumes a network environment where a service area (e.g., an FDD cell area) supporting the FDD scheme and a service area (e.g., a TDD cell area) supporting the TDD scheme co-exist. The FDD scheme and the TDD scheme, however, make use of different protocols. The use of different protocols means that the format of message transmitted on each channel, as well as the channel structure, differs.

Thus, application of the FDD-TDD LTE CA technique to wireless communication systems requires a scheme to be prepared to transmit control information for scheduling uplink/downlink data in multiple cell areas supportive of different duplex schemes.

According to an embodiment of the present disclosure, there may be provided an apparatus and method for transmitting control information to support the CA technique in a wireless communication system supportive of heterogeneous duplex schemes.

According to an embodiment of the present disclosure, there may be provided an apparatus and method for transmitting control information using a format defined to support the CA technique in a wireless communication system supportive of heterogeneous duplex schemes.

According to an embodiment of the present disclosure, there may be provided an apparatus and method for transmitting control information using a format defined considering a duplex scheme supported in a primary cell (PCell) area and a secondary cell (SCell) area in a wireless communication system supportive of the FDD-TDD LTE CA technique.

According to an embodiment of the present disclosure, a method for transmitting control information from a base station supporting a high-rate data service for a primary cell (PCell) area and a secondary cell (SCell) area comprises generating control information according to a format determined considering a primary duplex scheme supported in the PCell area and a secondary duplex scheme supported in the SCell area and transmitting the generated control information through a downlink control channel.

Here, the primary duplex scheme and the secondary duplex scheme are one of a frequency division duplex (FDD) scheme and a time division duplex (TDD) scheme and are different from each other.

According to an embodiment of the present disclosure, a method for scheduling a data channel by a terminal comprises receiving control information through a downlink control channel and scheduling at least one of a downlink data channel and an uplink data channel based on the received control information.

Here, a format of the control information is determined according to a duplex scheme supported in a primary cell (PCell) area and a duplex scheme supported in a secondary cell (SCell), and the PDSCH and the secondary duplex scheme are one of a frequency division duplex (FDD) scheme and a time division duplex (TDD) scheme and are different from each other.

According to an embodiment of the present disclosure, a base station supporting a high-rate data service for a primary cell (PCell) and a secondary cell (SCell) comprises a scheduler scheduling communication of an uplink/down physical channel and a transmitter configuring control information under control of the scheduler and transmitting the configured control information through a control channel constituting the downlink physical channel.

The scheduler determines a format of the control information considering a primary duplex scheme supported in the PCell area and a secondary duplex scheme supported in the SCell area. The primary duplex scheme and the secondary duplex scheme are one of a frequency division duplex (FDD) scheme and a time division duplex (TDD) scheme and are different from each other.

According to an embodiment of the present disclosure, a terminal comprises a receiver receiving control information through a downlink control channel and a controller scheduling at least one of a downlink data channel and an uplink data channel based on the received control information. Here, a format of the control information is determined according to a duplex scheme supported in a primary cell (PCell) area and a duplex scheme supported in a secondary cell (SCell), and wherein the PDSCH and the secondary duplex scheme are one of a frequency division duplex (FDD) scheme and a time division duplex (TDD) scheme and are different from each other.

### [BRIEF DESCRIPTION OF THE DRAWINGS]

Figs. 1 and 2 are views illustrating communication systems to which the present disclosure applies;
Figs. 3 and 4 are views illustrating HARQ timings for the cases where self-scheduling is set to a terminal for an S cell, and relevant PDCCHs are received in the S cell when scheduling is performed on a PDSCH or PUSCH transmitted from the S cell;
Figs. 5 and 6 are views illustrating HARQ timings for the cases where self-scheduling is set to a terminal for an S cell, and relevant PDCCHs are received in the S cell when scheduling is performed on a PDSCH or PUSCH transmitted from the S cell;
Figs. 7 and 8 are views illustrating HARQ timings for the cases where cross-carrier scheduling is set to a terminal for an S cell, i.e., relevant PDCCHs are received in a cell other than the S cell when scheduling is performed on a PDSCH or PUSCH transmitted from the S cell;
Figs. 9 and 10 are views illustrating HARQ timings for the cases where cross-carrier scheduling is set to a terminal for an S cell, i.e., relevant PDCCHs are received in a cell other than the S cell when scheduling is performed on a PDSCH or PUSCH transmitted from the S cell;
Figs. 11 and 12 are views illustrating a base station transmission operation and a terminal reception operation for a control channel according to an embodiment of the present disclosure;
Fig. 13 is a view illustrating a base station according to an embodiment of the present disclosure; and
Fig. 14 is a view illustrating a terminal according to an embodiment of the present disclosure.

### [DESCRIPTION OF EXEMPLARY EMBODIMENTS]

Hereinafter, representative embodiments for achieving the above-described objects are described. For ease of description, the terms for the entities defined herein may apply likewise throughout the detailed description. However, it should be appreciated that the terms used for ease of description do not limit the scope of the present disclosure and that the terms may apply, likewise or in an easily changed form, to systems with similar technical backgrounds.

When determined to make the subject matter of the present disclosure unclear, the detailed of the known functions or configurations may be skipped.

In various embodiments described below, a network environment is assumed in which a PCell area and an SCell area provide communication services based on different duplex schemes.

According to an embodiment of the present disclosure, a long term evolution-advanced (LTE-A) system may expand the number of cells to which a terminal gains access. In this case, the terminal may form links with multiple cells. The multiple cells forming the links with the terminal may include one primary cell (PCell) and at least one secondary cell (SCell). The PCell is a cell area supporting a primary duplex scheme, and the SCell is a cell area supporting a secondary duplex scheme.

For example, in an LTE-A system, the primary duplex scheme and the secondary duplex scheme may be determined to be either a frequency division duplex (FDD) scheme or a time division duplex (TDD) scheme. However, the primary duplex scheme and the secondary duplex scheme might not be determined to be the same scheme. In other words, when the primary duplex scheme is an FDD scheme, the secondary duplex scheme is supposed to be a TDD scheme, and when the primary duplex scheme is a TDD scheme, the secondary duplex scheme is supposed to be an FDD scheme.

A TDD scheme-based structure (TDD structure) is either a static TDD structure or a dynamic TDD structure. In the static TDD structure, an uplink-downlink (UL-DL) configuration is maintained, and in the dynamic TDD structure, a UL-DL configuration is varied by system information or a higher signal or downlink shared control channel.

As an example, when one frequency band is added to one cell having an FDD structure controled by a base station, it is easy to apply a TDD structure to the frequency band. This is why two different frequency bands are needed between downlink (DL) and uplink (UL) to operate an FDD structure in a cell.

Accordingly, when different duplex structures apply between cells due to limited addition of a frequency band or for other reasons, there should be prepared a scheme for transmitting control information to schedule data in multiple cells. Besides, a scheme also needs to be prepared to transmit control channels for data transmitted from multiple cells.

For example, it may be assumed that feedbacks should be transmitted only in a P cell for multiple cells in connection with control channels transmitted on uplink (hereinafter, "uplink control channels") corresponding to data transmitted on downlink (hereinafter, "downlink data"). In such case, a terminal may need a technique to transmit in the P cell feedbacks from cells having different frame structures. Also needed is a scheme to transmit control information for scheduling uplink data in multiple cells.

What is further needed is a scheme to transmit control channels on uplink (hereinafter, "downlink control channels") for a base station to schedule data transmitted on uplink (hereinafter, "uplink data").

In the embodiments described below, there are proposed apparatuses and methods for transmitting control channels between a base station and a terminal in a carrier aggregation system. By the same, the base station transmits control information for scheduling downlink data of multiple cells having different duplex structures to the terminal. For example, the multiple cells, after transmitting downlink data, receive, through the P cell, uplink data or signals for the transmitted downlink data. The terminal may transmit to the P cell the uplink data or signals for the downlink data.

As another example, the base station may transmit control information for scheduling uplink data of multiple cells having different duplex structure to the terminal. The terminal transmits uplink data based on the control information transmitted by the base station. The base station may transmit downlink control information for the uplink data.

As described above, the terminal and the base station may communicate control channels necessary for data scheduling and may simultaneously communicate data through multiple cells having different duplex structures.

In the embodiments described below, an LTE system and LTE-A system are assumed to be described. However, the proposed embodiments may also apply, without addition or omission, to other communication systems where base station scheduling applies.

Hereinafter, embodiments of the present disclosure are described in detail with reference to the accompanying drawings.

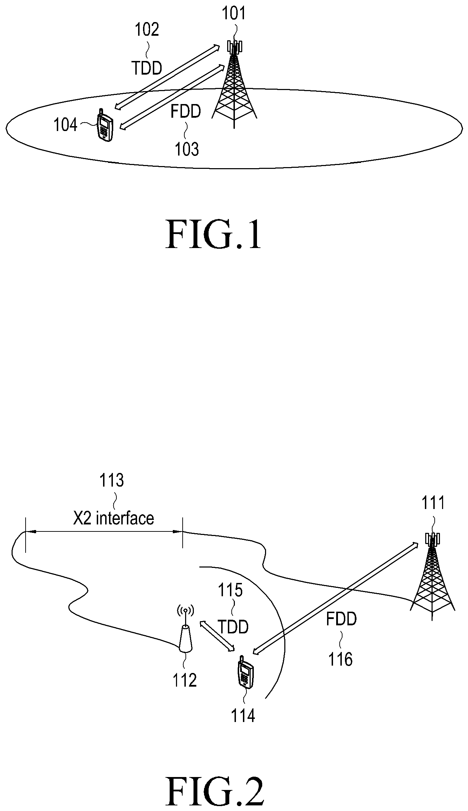

Figs. 1 and 2 illustrate examples of carrier aggregation systems to apply a proposed embodiment. Fig. 1 illustrates an example of a wireless communication network where a base station has both a TDD cell and an FDD cell, and Fig. 2 illustrates an example of a wireless communication network having a macro base station and a pico base station.

Referring to Fig. 1, a service area of one base station 101 may include multiple cells. In this case, the base station 101 may use one of the multiple cells as a PCell and at least one of the others as an SCell.

A terminal 104 communicates data with the base station 101 through a TDD cell 102 and an FDD cell 103. When the service area of the base station 101 includes multiple cells, the terminal 104 may transmit data through only one P cell among the multiple cells. That is, the terminal 104 may perform uplink transmission through only the P cell.

As an example, when the TDD cell 102 is the PCell, the terminal 104 performs uplink transmission through only the TDD cell 102. Otherwise, when the FDD cell 103 is the PCell, the terminal 104 performs uplink transmission through only the FDD cell 103.

Referring to Fig. 2, the network has a macro base station 111 for broader coverage and a pico base station 112 for increasing the volume of data transmitted. The terminal 114 communicates data with the macro base station 111 using an FDD scheme 116 and communicates data with the pico base station 112 using a TDD scheme 115.

As an example, when the macro base station 111 and the pico base station 112 have an ideal backhaul network, the terminal 114 may perform uplink transmission through only the macro base station 111 that is a P cell. An X2 interface 113 is provided between the macro base station 111 and the pico base station 112 to support high-rate transmission. The X2 interface 113 enables real-time transfer, to the pico base station 112, of relevant control information provided only to the macro base station 111 via uplink transmission by the terminal 114.

As another example, unless the macro base station 111 and the pico base station 112 have an ideal backhaul network, the terminal 114 performs uplink transmission to each of the macro base station 111 and the pico base station 112.

The following description is based on a network structure as shown in Fig. 1.

However, embodiments described below may also apply to a network structure as shown in Fig. 2.

According to an embodiment of the present disclosure, it is assumed that a primary duplex scheme is an FDD scheme, and a secondary duplex scheme is a TDD scheme and that self-carrier scheduling has been set up.

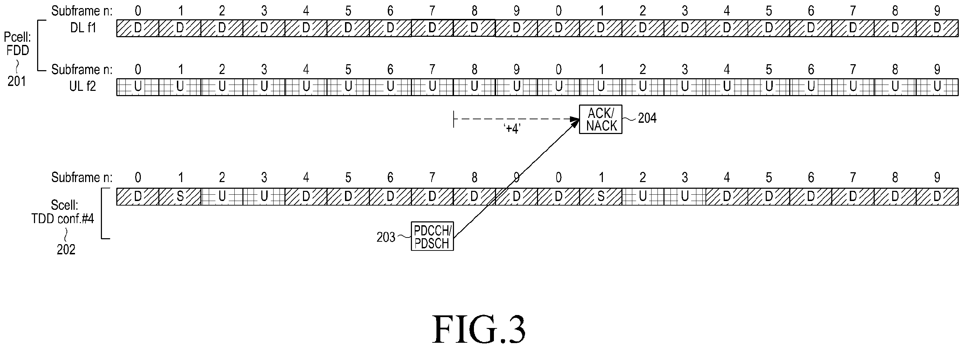

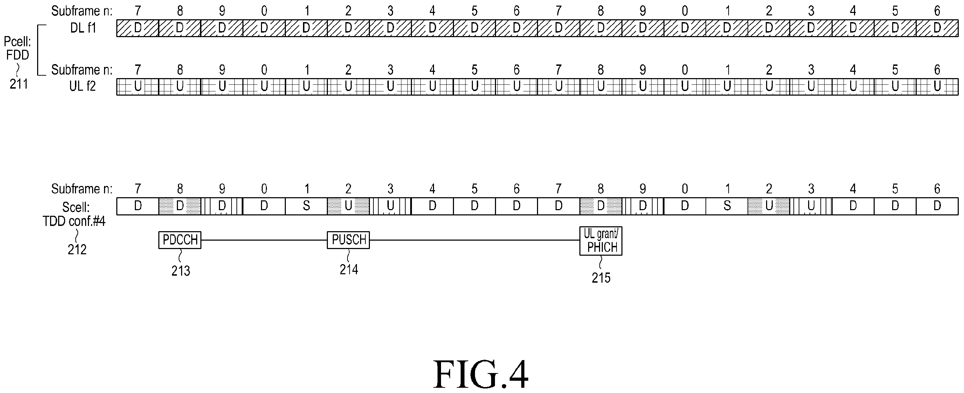

Figs. 3 and 4 illustrate examples of hybrid automatic repeat request (HARQ) timings according to embodiments of the present disclosure. Figs. 3 and 4 illustrate HARQ timings to receive a PDCCH to reference for scheduling a PDSCH or PUSCH.

Referring to Fig. 3, a P cell 201 supports an FDD scheme using a downlink frequency f₁ and an uplink frequency f₂. An S cell 202 supports a TDD scheme using a downlink subframe and an uplink subframe according to TDD UL-DL configuration #4.

The scheduling on the physical downlink shared channel (PDSCH) 203 in the S cell 202 is achieved by the physical downlink control channel (PDCCH). A signal (ACK) 204 responding to the PDSCH 203 is transmitted through an uplink subframe of the P cell 201 according to an HARQ timing defined for the P cell (FDD cell) 201. For example, the response signal 204 will be transmitted four subframes after reception of the PDSCH 203.

Referring to Fig. 4, a P cell 211 supports an FDD scheme using a downlink frequency f₁ and an uplink frequency f₂. An S cell 202 supports a TDD scheme using a downlink subframe and an uplink subframe according to TDD UL-DL configuration #4.

The PDCCH 213 for scheduling the physical uplink shared channel (PUSCH) 214 is transmitted in a particular downlink subframe (downlink subframe #8) of the S cell 202. When scheduling is triggered by the PDCCH 213, the terminal transmits the PUSCH 214 in uplink subframe #2 of the S cell 212. The base station transmits, in downlink subframe #8, a UL grant/physical hybrid-ARQ indicator channel (PHICH) 215 including a signal (ACK) responding to the PUSCH 214 received in uplink subframe #2. Uplink subframe #2 transmitting the PUSCH 214 and downlink subframe #8 transmitting the UL grant/PHICH 215 follow the HARQ timing defined in TDD UL-DL configuration #4.

Since the TDD cell generally has more downlink subframes than uplink subframes, response signals ACK responding to the PDSCHs scheduled in multiple downlink subframes are transmitted in one uplink subframe.

The control information transmitted on the PDCCH 213 includes a downlink assignment index (DAI) field. The DAI field may include two bits. The DAI field is transmitted to indicate whether the terminal has missed reception of the PDCCH transmitted in a particular downlink subframe. For ease of description, the DAI field contained in the PDCCH is hereinafter referred to as "DL DAI." The DL DAI may be contained only upon scheduling PDSCHs of the TDD cell, but not upon scheduling PDSCHs of the FDD cell. Further, it might not apply to TDD cells having 0 as their Ul-DL configurations and may apply only to TDD cells with UL-DL configurations 1 to 6.

The DAI field may be included in the PDCCH scheduling PUSCH as well as the PDCCH scheduling PDSCH. For ease of description, the DAI field contained in the PDCCH scheduling PUSCH is hereinafter referred to as "UL DAI." For example, the UL DAI is present only in UL-DL configurations 1 to 6 and may be used as a UL index field in UL-DL configuration 0.

The UL index field is included for scheduling PUSCHs in multiple uplink subframes through one downlink subframe. The reason is that when the UL-DL configuration of TDD cell is 0, uplink subframes are more than downlink subframes. As an example, the UL index field being set to 11 indicates to schedule PUSCHs in multiple uplink subframes.

The HARQ process field may be present only in the PDCCH scheduling PDSCH. As an example, in a downlink process in the FDD cell, re-transmission is conducted in only eight subframes depending on FDD cell timing. In this case, since eight processes are supportive, the HARQ process field is configured of three bits. Since HARQ timing differs depending on TDD UL-DL configurations in the TDD cell, a four-bit HARQ process field is present to support up to 15 processes.

Referring to Figs. 3 and 4, the terminal and the base station follow the FDD cell timing defined in the P cell as the HARQ timing for the PDSCH transmitted in the S cell and follows the HARQ timing defined according to the UL-DL configuration of the S cell as the HARQ timing for the PUSCH defined in the S cell.

According to an embodiment of the present disclosure, a DL/UL DAI, UL index, and HARQ process field are proposed. As an example, a DL/UL DAI, UL index, and HARQ process fields are proposed in the PDCCH for scheduling data transmitted in the S cell.
DL/UL DAI: since HARQ transmission is conducted according to FDD cell timing in PDSCH transmission in the S cell, HARQ-ACKs may be transmitted in every uplink subframe after four subframes whenever PDSCH is scheduled in each downlink subframe. Thus, no DL DAI/UL DAI field may be required in the PDCCH for scheduling PDSCH or PUSCH in the TDD cell.
UL index: since HARQ transmission is conducted according to TDD UL-DL configurations of the S cell in PUSCH transmission in the S cell, a UL index field may be required to schedule PUSCH in multiple uplink subframes through one downlink subframe when the UL-DL configuration of the TDD cell is 0.
HARQ process: since HARQ transmission is conducted according to FDD cell timing in PDSCH transmission of the S cell, three bits of HARQ process may be needed. According to an embodiment of the present disclosure, each field in the DL/UL DCI format may be proposed as follows.

For example, when self-scheduling for an S cell is set for a terminal in a network where a P cell supports an FDD scheme and the S cell supports a TDD scheme, a PDCCH (UL DCI format) scheduling PUSCH in the S cell may need a UL index field when the TDD UL-DL configuration of the S cell is 0. However, when the TDD UL-DL configuration of the S cell is 1 to 6, a UL DAI field, although present, might not apply.

Further, the PDCCH (DL DCI format) scheduling PDSCH in the S cell may have no DL DAI field regardless of TDD UL-DL configurations of the S cell. A DL DAI field, although present, might not apply, or may be fixed to "00."

The HARQ process field may have only three bits, or if having four bits, the MSB may be fixed to "0."

According to an embodiment of the present disclosure, a DL/UL DCI format is now described.

DCI format transmission by a base station in an S cell may come in two types.

The first one is a DCI format for data scheduling in the S cell transmitted to a terminal when self-scheduling for the S cell is set for the terminal in a network where the P cell supports an FDD scheme and the S cell supports a TDD scheme.

The second one is a DCI format for data scheduling in the P cell transmitted to a terminal where the S cell is set as the P cell.

In the first DCI format transmission type, transmission is performed including each field in the DL/UL DCI format proposed above. In the second DCI format transmission type, transmission is performed including the fields of the scheme applying in the TDD cell. In this case, when the base station transmits, in a common search space, system information, paging information, random access information, and multicast-broadcast single-frequency network (MBSFN) broadcast information that should be commonly transmitted regardless of the type of terminal through the FDD S cell, the first DC format and the second DCI format may be set to have the same length. In this case, since the second DCI format is always longer, the following methods may be used to make the first DCI format consistent in length with the second DCI format.

When a P cell supports an FDD scheme, an S cell supports a TDD scheme, and self-scheduling for the S cell is set for a terminal, a PDCCH (UL DCI format) scheduling PUSCH in the S cell may need a UL index field when the TDD UL-DL configuration of the S cell is 0. However, when the TDD UL-DL configuration of the S cell is 1 to 6, a UL DAI field, although present, might not apply.

Further, the PDCCH (DL DCI format) scheduling PDSCH in the S cell has a DL DAI field regardless of TDD UL-DL configurations of the S cell, but the DL DAI field might not apply or may be set to "00." The HARQ process field may have four bits, wherein the MSB is fixed to "0" while the three remaining bits only apply.

According to an embodiment of the present disclosure, it is assumed that a primary duplex scheme is a TDD scheme, and a secondary duplex scheme is an FDD scheme and that self-carrier scheduling has been set up.

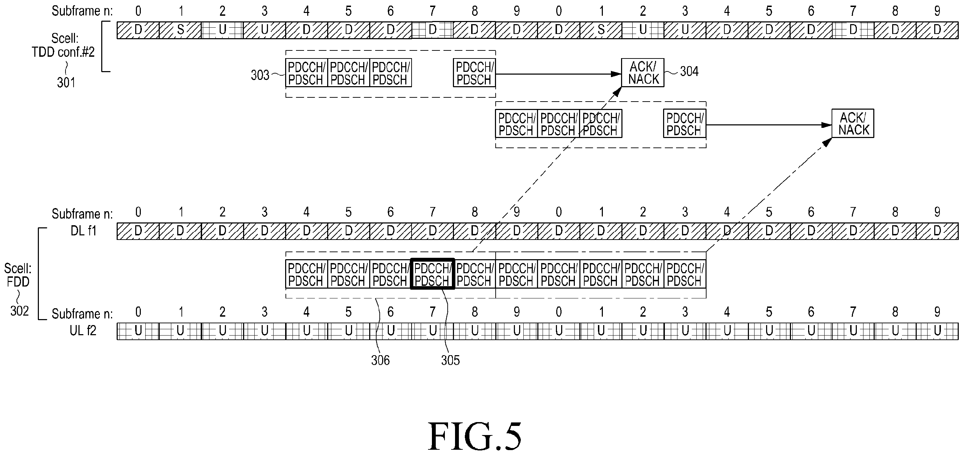

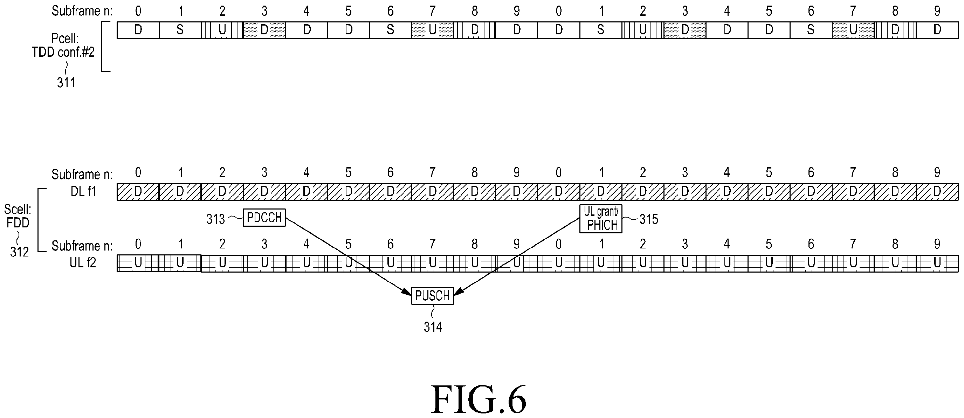

Figs. 5 and 6 illustrate HARQ timings for the cases whererelevant PDCCHs are received in the S cell when scheduling is performed on a PDSCH or PUSCH transmitted from the S cell.

Referring to Fig. 5, the P cell 301 supports a TDD scheme, and downlink subframes and uplink subframes are configured according to TDD UL-DL configuration #2. The S cell 302 supports an FDD scheme. The frequency for downlink transmission is f₁, and the frequency for uplink transmission is f₂.

PDSCHs 306 may be scheduled in the S cell 302 by PDCCH transmission in the S cell 302. In such case, the HARQ-ACK 304 for the PDSCHs 306 may be transmitted in uplink subframe #2 of the P cell 301 according to an HARQ timing defined in the P cell 301 and an additional HARQ timing for the PDSCHs 305 not defined in the P cell 301.

Although not shown in Fig. 5, it may also be possible to follow an HARQ timing according to a reference configuration set by higher signaling.

Referring to Fig. 6, the P cell 311 supports a TDD scheme, and downlink subframes and uplink subframes are configured according to TDD UL-DL configuration #2. The S cell 312 supports an FDD scheme. The frequency for downlink transmission is f₁, and the frequency for uplink transmission is f₂.

The PDCCH 313 for scheduling PUSCH in the S cell 312 is transmitted in downlink subframe #3 of the S cell 312. When scheduling is triggered by the PDCCH 313, the terminal may transmit a PUSCH 314 in uplink subframe #7 of the S cell 312 after four subframes according to the FDD HARQ timing defined in the S cell 312.

The base station may transmit a UL grant/PHICH 315 in downlink subframe #1 after four subframes according to the FDD HARQ timing defined in the S cell 312, as an HARQ-ACK responsive to the PUSCH 314.

To summarize the operations described above in connection with Figs. 5 and 6, the terminal and the base station follow the timing by the reference UL-DL configuration or the timing defined according to the UL-DL configuration defined in the P cell as HARQ timing for the PDSCH transmitted in the S cell and follow the FDD HARQ timing defined in the FDD cell as HARQ timing for the PUSCH defined in the S cell.

According to an embodiment of the present disclosure, a DL/UL DAI, UL index, and HARQ process fields in the PDCCH for scheduling data transmitted in the S cell are proposed as follows:
DL/UL DAI: HARQ transmission for PDSCH transmission in the S cell may be conducted according to the timing by the reference UL-DL configuration or the UL-DL configuration defined in the P cell. In this case, HARQ-ACKs for PDSCHs scheduled in multiple downlink subframes may be transmitted in one uplink subframe. Thus, no DL DAI/UL DAI field may be required in the PDCCH for scheduling PDSCH or PUSCH in the FDD S cell.
UL index: HARQ transmission for PUSCH transmission in the S cell may be carried out according to FDD cell timing. In this case, no UL index field may be required regardless of UL-DL configurations of the TDD P cell.
HARQ process: HARQ transmission for PDSCH transmission in the S cell may be conducted according to the timing by the reference UL-DL configuration or the UL-DL configuration defined in the P cell. In this case, four bits of HARQ process may be needed.

According to an embodiment of the present disclosure, each field in the DL/UL DCI format is described below.

The PDCCH (UL DCI format) scheduling PUSCH in the S cell may always have a UL DAI field regardless of TDD UL-DL configurations of the P cell. That is, although the TDD UL-DL configuration of the P cell is 0, there may be a UL DAI field.

Further, the PDCCH (DL DCI format) scheduling PDSCH in the S cell may always have a DL DAI field regardless of TDD UL-DL configurations of the P cell. That is, although the TDD UL-DL configuration of the P cell is 0, there may be a DL DAI field. The HARQ process field has four bits all of which apply.

According to an embodiment of the present disclosure, a DL/UL DCI format is described.

DCI format transmission by a base station in an S cell may come in two types. The first one is a DCI format for data scheduling in the S cell transmitted to a terminal when the P cell supports a TDD scheme, the S cell supports an FDD scheme, and self-scheduling for the S cell is set for the terminal.

The second one is a DCI format for data scheduling in the P cell transmitted to a terminal where the S cell is set as the P cell.

In the first DCI format transmission type, transmission is performed including each field in the DL/UL DCI format proposed above. In the second DCI format transmission type, transmission is performed including the fields of the scheme originally applying in the FDD cell.

When the base station transmits, in a common search space, system information, paging information, random access information, and multicast-broadcast single-frequency network (MBSFN) broadcast information that should be commonly transmitted regardless of the type of terminal through the S cell, the first DC format and the second DCI format cannot have the same length.

The reason is that the second DCI format is shorter in length than the first DCI format, and the length of the second DCI format cannot be adjusted because it need support terminals already present.

Accordingly, the following two schemes are proposed to support fallback in the common search space and transmission of common information upon transmission of the first DCI format.

Fallback may generally set a transmission mode to a terminal by a higher signal. In this case, the terminal may decode the DCI format that is based on the size-2 transmission mode in Table 2 below. Here, when the channel condition abruptly turns poor or as required by the base station, the terminal may allow the size-1 DCI format 1A/0 to be decoded in the common search space and UE-specific search space and may determine that the transmission scheme to be a preset transmission scheme for each transmission mode. This is called "fallback."

**[Table 1]**

| Search Space | Size 1 | Size 2 |
|---|---|---|
| Common | 1A/O | 1C |
| UE-Specific | 1A/O | DCI format depending on TM |

First scheme: When the P cell is of TDD scheme, the S cell is of FDD scheme, and self-scheduling for the S cell is set in the terminal, transmission in the UE specific search space is performed in the first DCI format for scheduling data in the S cell transmitted to the terminal. Transmission in the common search space is conducted in the second DCI format. That is, since the first DCI format and the second DCI format include different lengths of fields or do not include a particular field, the base station should transmit different lengths of DCI formats for the search spaces, respectively, when transmitting a DCI format to a particular terminal. In such case, the terminal needs to decode the DCI formats of different lengths for the search spaces, respectively.

In the following Table 2, 1A/0 (C) of Size 1 means format 1A/0 and includes a field in the second DCI format. 1A/0 (D) of Size 1 means format 1A/0 and includes a field in the first DCI format.

**[Table 2]**

| Search Space | Size 1 | Size 1' | Size 2 |
|---|---|---|---|
| Common | 1A/O (C) | | 1C |
| UE-Specific | | 1A/O (D) | DCI format depending on TM |

Here, fallback may be allowed or not in the common search space.

In the case where fallback is allowed, since there is no DAI field and the HARQ process field has only three bits when the terminal receives the second DCI format, a terminal operation for the same is needed.

The terminal operation for the DAI field may have an HARQ-ACK transmitted, with the DAI field value deemed "00." Alternatively, an HARQ-ACK may be transmitted with the DAI field value deemed to be the DAI value of the DCI format previously received + 1. Or, an HARQ-ACK may be transmitted, with the DAI field value deemed to be a max value.

In the terminal operation for the HARQ process field, a one-bit new data indicator (NDI) is added to have the HARQ field configured with four bits. Here, data by scheduling may be previously defined to be always new data or previous data. Alternatively, since high order modulation is less likely to apply upon re-transmission, the one-bit MSB of the MCS may be added to configure the HARQ field.

Second scheme: When the P cell is of TDD scheme, the S cell is of FDD scheme, and self-scheduling for the S cell is set in the terminal, transmission in both the common search space and the UE specific search space may be performed in the first DCI format for scheduling data in the S cell transmitted to the terminal. That is, the base station should always transmit the first DCI format regardless of search spaces when transmitting a DCI format to the terminal, and the terminal should decode the first DCI format regardless of search spaces.

In the following Table 3, 1A/0 (D) of Size 1 means format 1A/0 and includes a field in the first DCI format.

**[Table 3]**

| Search Space | Size 1 | Size 1' | Size 2 |
|---|---|---|---|
| Common | | 1A/O (D) | 1C |
| UE-Specific | | 1A/O (D) | DCI format depending on TM |

Here, 1A/0(D) in the common search space may allow only fallback, and common information is transmitted only in size-2 format 1C. Or, 1A/0(D) in the common search space may allow both fallback transmission and common information transmission. Here, upon transmission of the common information, the DCI format for scheduling data in the S cell transmitted to the terminal having self-scheduling set for the S cell and where the P cell is of TDD scheme and the S cell is of FDD scheme may have a different length from the DCI format for scheduling data in the P cell transmitted to the terminal where the FDD S cell is set as the P cell. In such case, the common information cannot but be transmitted using different DCI formats. Accordingly, twice resources are needed to transmit common information required for all the terminals in the cell.

According to an embodiment of the present disclosure, it is assumed that a primary duplex scheme is an FDD scheme, and a secondary duplex scheme is a TDD scheme and that cross-carrier scheduling has been set up.

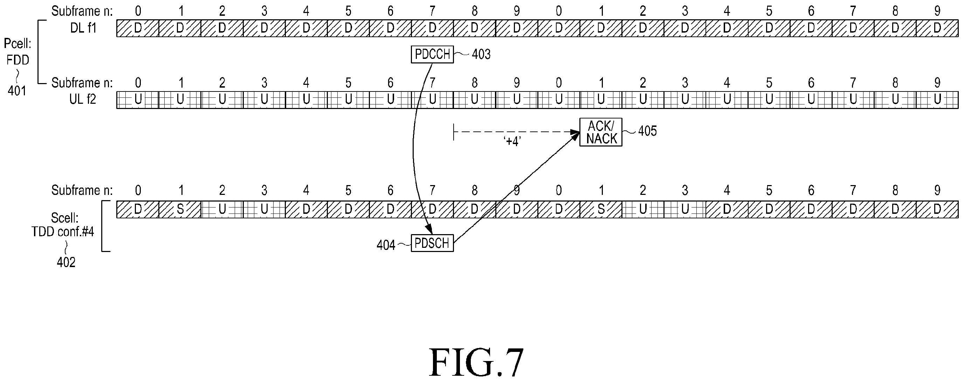

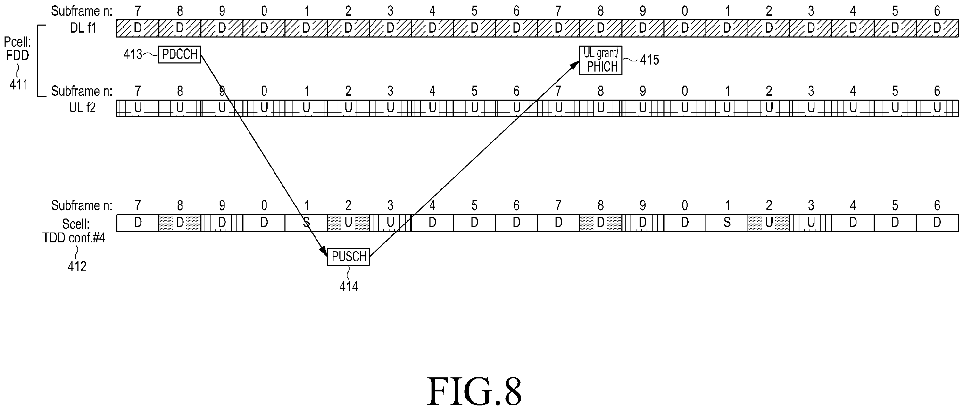

Figs. 7 and 8 are views illustrating HARQ timings for the case where relevant PDCCHs are set to be received from a cell (P cell or another S cell) other than the S cell (where, three bits of carrier indicator field (CIF) is added to the PDCCH).

Referring to Fig. 7, the P cell 401 supports an FDD scheme. The frequency for downlink transmission is f₁, and the frequency for uplink transmission is f₂. The S cell 402 supports a TDD scheme, and downlink subframes and uplink subframes are configured according to TDD UL-DL configuration #4.

If a PDCCH 403 is transmitted in downlink subframe #7 in the P cell 401, and PDSCHs 404 are scheduled in the S cell 402 by the PDCCH 403, an HARQ-ACK 405 for the PDSCHs 404 may be transmitted in uplink subframe #1 of the P cell 401 after four subframes according to the HARQ timing defined in the FDD cell.

Although the cross-carrier scheduling cell, i.e., the cell where the PDCCH is transmitted, is assumed to be the P cell 401 in Fig. 7, the same also applies where the PDCCH is transmitted in another S cell 402.

Referring to Fig. 8, the P cell 411 supports an FDD scheme. The frequency for downlink transmission is f₁, and the frequency for uplink transmission is f₂. The S cell 412 supports a TDD scheme, and downlink subframes and uplink subframes are configured according to TDD UL-DL configuration #4.

The PDCCH 413 is transmitted in downlink subframe #8 in the P cell 411, and the terminal transmits, by the PDCCH 413, the PUSCH 414 in uplink subframe #2 of the S cell 412 according to the HARQ timing defined in TDD UL-DL configuration #4 of the S cell 412.

The base station may transmit a UL grant/PHICH 415 in downlink subframe # 8 of the FDD P cell according to the HARQ timing defined in TDD UL-DL configuration #4 of the S cell, as an HARQ-ACK for the PUSCH 414.

Although in Fig. 8 the cross-carrier scheduling cell is assumed to be the P cell 411, another S cell may be the cross-carrier scheduling cell. Further, although assumed to follow the HARQ timing by TDD UL-DL configuration #4 set in the S cell, such an HARQ timing may also be possible where, regardless of TDD UL-DL configurations, the PUSCH is always transmitted in the uplink subframe, which is four subframes after PDCCH transmission, and the UL grant/PHICH is transmitted in the downlink subframe, which is six subframes after PUSCH transmission. For ease of description, the HARQ timing is herein referred to as 10ms timing.

To summarize the operations according to Figs. 7 and 8, the terminal and the base station follow the FDD cell timing defined in the P cell as the HARQ timing for the PDSCH transmitted in the S cell and follows the HARQ timing or 10ms HARQ timing defined according to the UL-DL configuration of the S cell as the HARQ timing for the PUSCH defined in the S cell.

According to an embodiment of the present disclosure, a DL/UL DAI, UL index, and HARQ process fields may be proposed as follows:
A DL/UL DAI, UL index, and HARQ process fields in the PDCCH for scheduling data transmitted in the S cell are first proposed as follows:
   DL/UL DAI: HARQ transmission for PDSCH transmission in the S cell may be carried out according to FDD cell timing. In this case, an HARQ-ACK may be transmitted in each uplink subframe after four subframes whenever PDSCHs are scheduled in every downlink subframe. Thus, no DL DAI/UL DAI field may be required in the PDCCH for scheduling PDSCH or PUSCH in the TDD cell.
   UL index: HARQ transmission for PUSCH transmission in the S cell may be carried out according to the TDD UL-DL configuration of the S cell. In this case, when the UL-DL configuration of the TDD cell is 0, a UL index field is needed to schedule the PUSCH in multiple uplink subframes through one downlink subframe.
   HARQ process: HARQ transmission for PDSCH transmission of the S cell may be carried out according to FDD cell timing. In this case, three bits of HARQ process may be needed.

According to an embodiment of the present disclosure, each field in the DL/UL DCI format is described below.

When a P cell supports an FDD scheme, an S cell supports a TDD scheme, and carrier-scheduling for the S cell is set for a terminal, a PDCCH (UL DCI format) scheduling PUSCH in the S cell may need a UL index field when the TDD UL-DL configuration of the S cell is 0. When the TDD UL-DL configuration of the S cell is 1 to 6, a UL DAI field, although present, might not apply. Further, the PDCCH (DL DCI format) scheduling PDSCH in the S cell has no DL DAI field regardless of TDD UL-DL configurations of the S cell, or has a DL DAI field that however does not apply or that may be fixed to "00." The HARQ process field has only three bits or has four bits of which three bits only apply while the MSB is fixed to "0."

The second proposal for a DL/UL DAI, UL index, and HARQ process fields in the PDCCH for scheduling data transmitted in the S cell is as follows:
DL/UL DAI: HARQ transmission for PDSCH transmission in the S cell may be carried out according to FDD cell timing. In this case, an HARQ-ACK may be transmitted in each uplink subframe after four subframes whenever PDSCHs are scheduled in every downlink subframe. Thus, no DL DAI/UL DAI field may be required in the PDCCH for scheduling PDSCH or PUSCH in the TDD cell.
UL index: HARQ transmission for PUSCH transmission in the screen configuration may require no UL index field because, upon HARQ transmission according to 10ms HARQ timing, although the UL-DL configuration of the TDD cell is 0, the PUSCH in one uplink subframe may be scheduled through one downlink subframe.
HARQ process: HARQ transmission for PDSCH transmission of the S cell may be carried out according to FDD cell timing. In this case, three bits of HARQ process may be needed.

According to an embodiment of the present disclosure, each field in the DL/UL DCI format is described below.

When a P cell supports an FDD scheme, an S cell supports a TDD scheme, and carrier-scheduling for the S cell is set for a terminal, a PDCCH (UL DCI format) scheduling PUSCH in the S cell has a UL index field when the TDD UL-DL configuration of the S cell is 0, but the UL index field might not apply. When the TDD UL-DL configuration of the S cell is 1 to 6, a UL DAI field, although present, might not apply.

Or, the PDCCH (UL DCI format) scheduling PUSCH in the S cell has no UL index field or UL DAI field regardless of TDD UL-DL configurations of the S cell. Further, the PDCCH (DL DCI format) scheduling PDSCH in the S cell has no DL DAI field regardless of TDD UL-DL configurations of the S cell, or has a DL DAI field that however does not apply or that may be fixed to "00." The HARQ process field has only three bits, or if the HARQ process field has four bits, the MSB is fixed to "0" and the other three bits may apply.

According to an embodiment of the present disclosure, it is assumed that a primary duplex scheme is a TDD scheme, and a secondary duplex scheme is an FDD scheme and that cross-carrier scheduling has been set up.

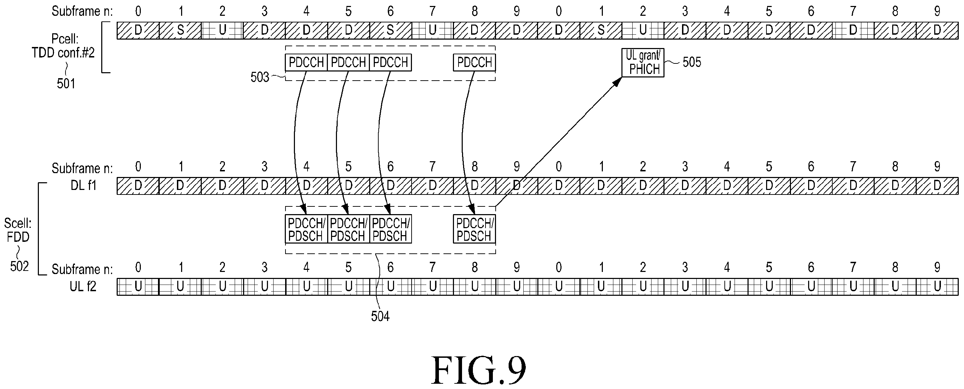

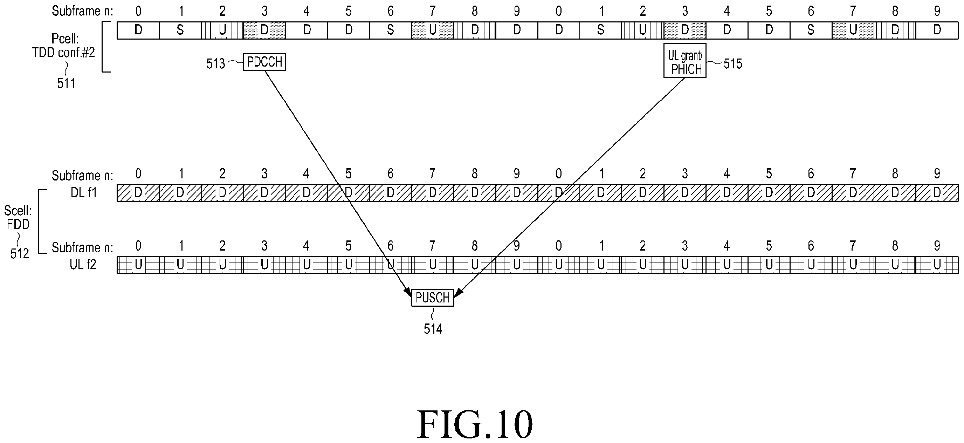

Figs. 9 and 10 illustrate HARQ timings for the case where, upon scheduling the PDSCH or PUSCH transmitted from an S cell, relevant PDCCHs are set to be received from a cell (P cell or another S cell) other than the S cell (where, three bits of carrier indicator field (CIF) is added to the PDCCH).

Referring to Fig. 9, the P cell 501 is of TDD scheme, and downlink subframes and uplink subframes are configured according to TDD UL-DL configuration #2. The S cell 502 is of FDD scheme. The frequency for downlink transmission is f₁, and the frequency for uplink transmission is f₂.

If PDCCHs 503 respectively are transmitted in downlink subframes #4, #5, #6, and #8 in the P cell, and PDSCHs 504 respectively are scheduled in the S cell 502 by the PDCCHs 503, an HARQ-ACK 505 for the PDSCHs 504 are transmitted in uplink subframe #2 of the P cell according to the HARQ timing defined in the P cell.

Referring to Fig. 9, although the cross-carrier scheduling cell, i.e., the cell where PDCCH is transmitted, is assumed to be the P cell, the same may also apply where PDCCH is transmitted in another S cell. Although not shown in Fig. 9, it may also be possible to follow an HARQ timing according to a reference configuration set by higher signaling.

Referring to Fig. 10, the P cell 511 is of TDD scheme, and downlink subframes and uplink subframes are configured according to TDD UL-DL configuration #2. The S cell 512 is of FDD scheme. The frequency for downlink transmission is f₁, and the frequency for uplink transmission is f₂.

The PDCCH 513 is transmitted in downlink subframe #3 in the P cell 511, and the terminal may transmit, by the PDCCH 513, the PUSCH 514 in uplink subframe #7 of the S cell 512 according to the HARQ timing defined in TDD UL-DL configuration #2 of the P cell 511. The base station may transmit a UL grant/PHICH 515 in downlink subframe #3 of the P cell 511 according to the HARQ timing defined in TDD UL-DL configuration #2 of the S cell 512, as an HARQ-ACK for the PUSCH 514.

Although in Fig. 10 the cross-carrier scheduling cell is assumed to be the P cell, another S cell may be the cross-carrier scheduling cell. Further, although it has been assumed to follow the HARQ timing by TDD UL-DL configuration #2 set in the P cell, such an HARQ timing, i.e., 10ms HARQ timing, may also be possible where, regardless of TDD UL-DL configurations, the PUSCH is always transmitted in the uplink subframe, which is four subframes after PDCCH transmission, and the UL grant/PHICH is transmitted in the downlink subframe, which is six subframes after PUSCH transmission.

To summarize the operations described above in connection with Figs. 9 and 10, the terminal and the base station follow the timing by the reference UL-DL configuration or the timing defined according to the UL-DL configuration defined in the TDD P cell as HARQ timing for the PDSCH transmitted in the S cell and follow the HARQ timing or 10ms HARQ timing defined according to the UL-DL configuration of the TDD P cell as HARQ timing for the PUSCH defined in the S cell.

A DL/UL DAI, UL index, and HARQ process fields in the PDCCH for scheduling data transmitted in the S cell are first proposed as follows:
DL/UL DAI: HARQ transmission for PDSCH transmission in the S cell may be conducted according to the timing by the reference UL-DL configuration or the UL-DL configuration defined in the P cell. In this case, HARQ-ACKs for PDSCHs scheduled in multiple downlink subframes may be transmitted in one uplink subframe. Thus, no DL DAI/UL DAI field may be required in the PDCCH for scheduling PDSCH or PUSCH in the FDD S cell.
UL index: since HARQ transmission for PUSCH in the S cell is conducted according to TDD UL-DL configurations of the cross-carrier scheduling cell (the P cell in Figs. 5-2), a UL index field may be required to schedule PUSCH in multiple uplink subframes through one downlink subframe when the UL-DL configuration of the TDD cell is 0.
HARQ process: Since HARQ timing is performed according to the timing by the reference UL-DL configuration or UL-DL configuration defined in the TDD P cell, four bits of HARQ process may be needed.

According to an embodiment of the present disclosure, each field in the DL/UL DCI format is described below.

When a P cell is of TDD scheme, an S cell is of FDD scheme, and carrier-scheduling for the S cell is set for a terminal, a PDCCH (UL DCI format) scheduling PUSCH in the S cell may have a UL index field when the TDD UL-DL configuration of the S cell is 0. In the case where the TDD UL-DL configuration of the P cell is 1 to 6, a UL DAI field may be present. Further, the PDCCH (DL DCI format) scheduling PDSCH in the S cell may have a DL DAI field in the case where the TDD UL-DL configuration of the P cell is 1 to 6. When the TDD UL-DL configuration of the P cell is 0, a DL DAI field may be present but might not apply. The HARQ process field has four bits all of which apply.

The second proposal for a DL/UL DAI, UL index, and HARQ process fields in the PDCCH for scheduling data transmitted in the S cell is as follows:
DL/UL DAI: HARQ transmission for PDSCH transmission in the S cell may be conducted according to the timing by the reference UL-DL configuration or the UL-DL configuration defined in the P cell. In this case, HARQ-ACKs for PDSCHs scheduled in multiple downlink subframes may be transmitted in one uplink subframe. Thus, no DL DAI/UL DAI field may be required in the PDCCH for scheduling PDSCH or PUSCH in the FDD S cell.
UL index: HARQ transmission for PUSCH transmission in the S cell may be carried out according to 10ms HARQ timing. In this case, even when the UL-DL configuration of the TDD cell is 0, PUSCH may be scheduled in one uplink subframe through one downlink subframe, and thus, no UL index field may be required.
HARQ process: HARQ transmission for PDSCH transmission of the S cell may be conducted according to the timing by the reference UL-DL configuration or the UL-DL configuration defined in the P cell. In this case, four bits of HARQ process may be needed.

According to an embodiment of the present disclosure, each field in the DL/UL DCI format is described below.

The P cell is of TDD scheme, the S cell is of FDD scheme, and cross-carrier scheduling for the S cell is set in the terminal. In this case, the PDCCH (UL DCI format) scheduling PUSCH in the S cell may have a UL index field that however might not apply in the case where the TDD UL-DL configuration of the P cell is 0. However, in the case where the TDD UL-DL configuration of the P cell is one to six, a UL DAI field may be present. Further, the PDCCH (DL DCI format) scheduling PDSCH in the S cell may have a DL DAI field in the case where the TDD UL-DL configuration of the P cell is 1 to 6. When the TDD UL-DL configuration of the P cell is 0, a DL DAI field is present but does not apply. The HARQ process field may have four bits all of which may apply.

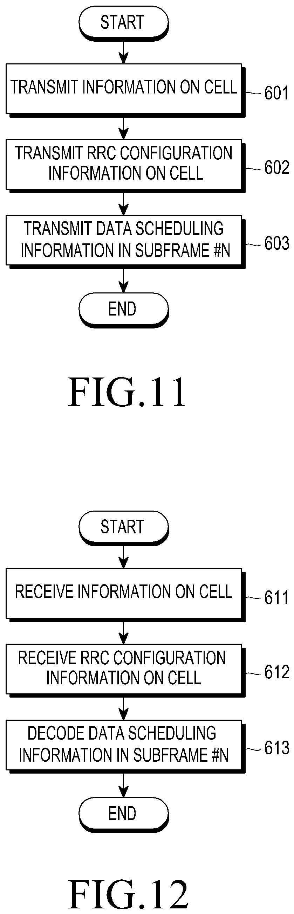

Fig. 11 illustrates a transmission operation by a base station for control channels according to an embodiment of the present disclosure. Fig. 12 illustrates a reception operation by a terminal for control channels according to an embodiment of the present disclosure.

Referring to Fig. 11, the base station transmits information on cells to the terminal in step 601. The information includes duplex information on a P cell and UL-DL configuration information. In step 602, the base station transmits RRC configuration information on the cells to the terminal. The information includes duplex information on S cells, UL-DL configuration information, and reference configuration information for HARQ timing. In step 603, the base station transmits data scheduling information in subframe n. The data scheduling information may include particular fields according to a method proposed herein.

Referring to Fig. 12, the terminal receives the information on the cells from the base station in step 611. The information includes duplex information on a P cell and UL-DL configuration information. In step 612, the terminal receives the RRC configuration information on the cells. The information includes duplex information on S cells, UL-DL configuration information, and reference configuration information for HARQ timing. In step 613, the terminal attempts to decode the data scheduling information in subframe n. The data scheduling information may contain particular fields. The terminal performs the decoding assuming the length of a DCI format to be received depending on whether the particular fields are contained.

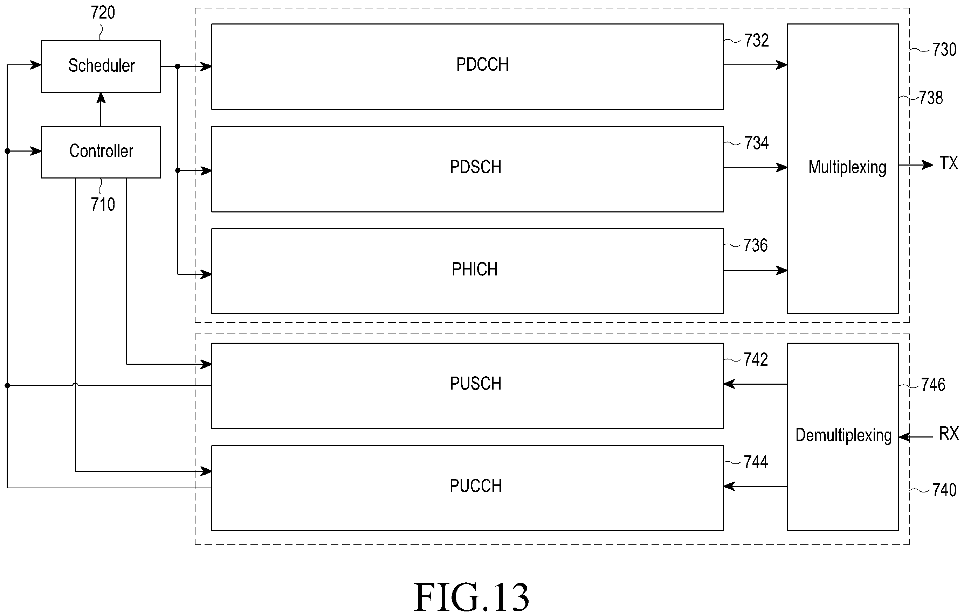

Fig. 13 illustrates a base station according to an embodiment of the present disclosure.

Referring to Fig. 13, the base station includes a transmitter 730 including a PDCCH block 732, a PDSCH block 734, a PHICH block 736, and a multiplexer 738, a receiver 740 including a PUSCH block 742, a physical uplink control channel (PUCCH) block 744, and a demultiplexer 746, a controller 710 including DL/UL HARQ-ACK communication timing control, and a scheduler 720. Here, the DL/UL HARQ-ACK communication timing includes PUCCH transmission timing for PDSCH transmission, PUSCH timing for PDCCH transmission, and UL grant/PHICH timing for PUSCH transmission. Although multiple transmitters 730 and receivers 740 (except the PUCCH block) may be provided for communication on multiple cells, it is assumed that one transmitter 730 and one receiver 740 are provided for the purpose of description.

The controller 710 including the DL/UL HARQ-ACK communication timing control adjusts timing relationships between physical channels for the terminal, which the controller 710 is to schedule, by referencing, e.g., the volume of data to be transmitted to the terminal and the amount of resources available in the system and informs the scheduler 720, the PDCCH block 732, the PDSCH block 734, the PHICH block 736, the PUSCH block 742, and the PUCCH block 744. The DL/UL HARQ-ACK communication timing relationships follow the methods described above in connection with specific embodiments. The PDCCH block 732 configures control information as proposed above under the control of the scheduler 720. The control information, together with other signals, is multiplexed and output by the multiplexer 738.

The PDSCH block 734 generates data under the control of the scheduler 720. The data, together with other signals, is multiplexed and output by the multiplexer 738.

The PHICH block 736 generates an HARQ ACK/NACK for the PUSCH received from the terminal under the control of the scheduler 720. The HARQ ACK/NACK together with other signals is multiplexed and output by the multiplexer 738.

The multiplexed signals are generated into OFDM signals that are then transmitted to the terminal.

The PUSCH block 742 in the receiver obtains PUSCH data for the signals received from the terminal. Whether there is an error in the result of decoding the PUSCH data is notified to the scheduler 720 to adjust downlink HARQ ACK/NACK generation and is applied to the controller 710 controlling DL/UL HARQ-ACK communication timing to allow the HARQ ACK/NACK transmission timing to be adjusted.

The PUCCH block 744 obtains an uplink ACK/NACK or CQI from a signal received from the terminal according to the DL/UL HARQ-ACK communication timing. The obtained uplink ACK/NACK or CQI is applied to the scheduler 720 and is used to determine whether to re-transmit the PDSCH and a modulation and coding scheme (MCS). The obtained uplink ACK/NACK is applied to the controller 710 to adjust the transmission timing of PDSCH.

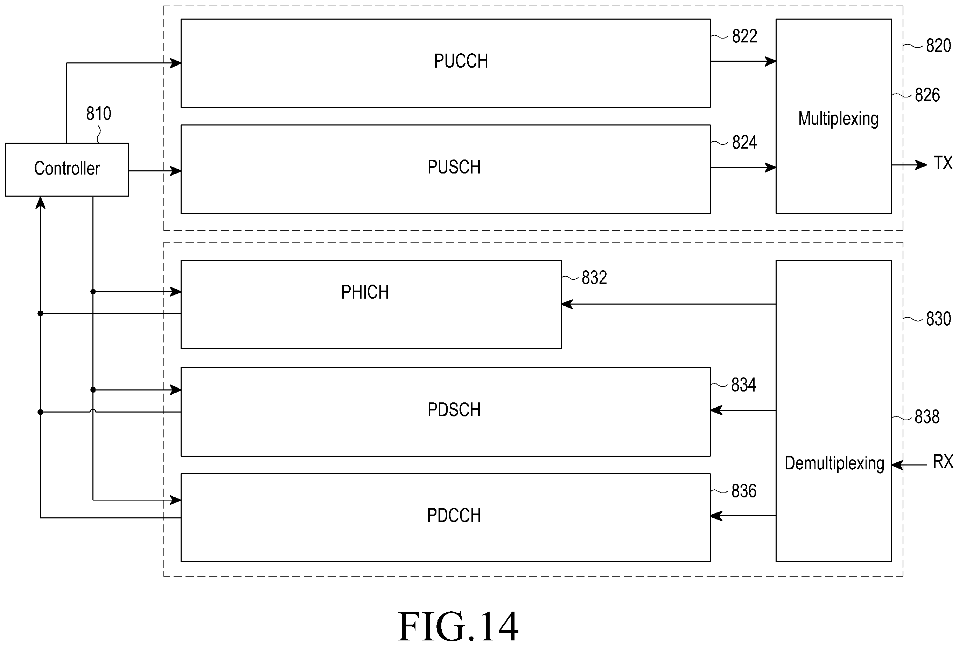

Fig. 14 illustrates a terminal according to an embodiment of the present disclosure.

Referring to Fig. 14, the terminal includes a transmitter 820 including a PUCCH block 822, a PUSCH block 824, and a multiplexer 826, a receiver 830 including a PHICH block 832, a PDSCH block 834, a PDCCH block 836, and a demultiplexer 838, and a controller 810 including DL/UL HARQ-ACK communication timing control. Although multiple transmitters 820 and receivers 830 (except the PUCCH block) may be provided for communication on multiple cells, it is assumed that one transmitter 820 and one receiver 830 are provided for the purpose of description.

The controller 810 controlling DL/UL HARQ-ACK communication timing notifies what cell is used to receive PDSCH or transmit PUSCH upon self-scheduling or cross-carrier scheduling from the DCI received from the base station, selects a cell for DL/UL HARQ-ACK transmission and adjusts the communication timing relationships between physical channels to notify the PUCCH block 822, PUSCH block 824, PHICH block 832, PDSCH block 834, and the PDCCH block 836. The DL/UL HARQ-ACK communication timing relationships follow the methods described above in connection with the proposed embodiments.

The PUCCH block 822 configures an HARQ ACK/NACK or CQI with uplink control information (UCI) under the timing control of the controller 810 controlling DL/UL HARQ-ACK communication timing. The HARQ ACK/NACK or CQI, together with other signals, is multiplexed and output by the multiplexer 826.

The PUSCH 824 extracts data to be transmitted. The extracted data, together with other signals, is multiplexed and output by the multiplexer 826.

The multiplexed signals are generated into single carrier frequency division multiple access (SC-FDMA) signals that are then transmitted to the base station considering DL/UL HARQ-ACK communication timing according to the present disclosure.

The PHICH block 832 in the receiver separates, through the demultiplexer 838, the PHICH signal from the signals received as per the DL/UL HARQ-ACK communication timing from the base station and then obtains whether to HARQ ACK/NACK for the PUSCH.

The PDSCH block 834 separates, through the demultiplexer 838, the PDSCH signal from the signals received from the base station and then obtains PDSCH data. Whether there is an error in the result of decoding the data is notified to the PUCCH 822 to adjust uplink HARQ ACK/NACK generation and is applied to the controller 810 controlling DL/UL HARQ-ACK communication timing to allow timing to be adjusted upon uplink HARQ ACK/NACK transmission.

The PDCCH block 836 separates the PDCCH signal through the demultiplexer 838 and then performs decoding under the assumption of a DCI format including particular fields according to a particular embodiment as proposed to obtain the DCI from the decoded signal.

Although specific embodiments of the present disclosure have been described above, various changes may be made thereto without departing from the scope of the present disclosure. Thus, the scope of the present disclosure should not be limited to the above-described embodiments, and should rather be defined by the following claims and equivalents thereof.

## Claims

1. A method for transmitting control information from a base station supporting a high-rate data service for a primary cell (PCell) area and a secondary cell (SCell) area, the method comprising:
generating control information according to a format determined considering a primary duplex scheme supported in the PCell area and a secondary duplex scheme supported in the SCell area; and
transmitting the generated control information through a downlink control channel, wherein the primary duplex scheme and the secondary duplex scheme are one of a frequency division duplex (FDD) scheme and a time division duplex (TDD) scheme and are different from each other.

2. The method of claim 1, wherein a scheduling scheme for the SCell is further considered when determining the format of the control information.

3. The method of claim 2, wherein the scheduling scheme for the SCell is one of self-carrier scheduling and cross-carrier scheduling.

4. The method of claim 3, wherein when the primary duplex scheme is a TDD scheme, the secondary duplex scheme is an FDD scheme, and the scheduling scheme for the SCell is self-carrier scheduling, the format of downlink control information constituting the control information includes a downlink assignment index (DAI) field for downlink and a four-bit hybrid automatic repeat request (HARQ) process field, and the format of uplink control information constituting the control information includes a downlink assignment index (DAI) field for uplink.

5. The method of claim 3, wherein when the primary duplex scheme is an FDD scheme, the secondary duplex scheme is a TDD scheme, and the scheduling scheme for the SCell is cross-carrier scheduling, the format of downlink control information constituting the control information includes a three-bit hybrid automatic repeat request (HARQ) process field, and the format of uplink control information constituting the control information includes an uplink index field.

6. A method for scheduling a data channel by a terminal, the method comprising:
receiving control information through a downlink control channel; and
scheduling at least one of a downlink data channel and an uplink data channel based on the received control information, wherein a format of the control information is determined according to a duplex scheme supported in a primary cell (PCell) area and a duplex scheme supported in a secondary cell (SCell), and wherein the PDSCH and the secondary duplex scheme are one of a frequency division duplex (FDD) scheme and a time division duplex (TDD) scheme and are different from each other.

7. The method of claim 6, wherein the format of the control information is determined further considering a scheduling scheme for the SCell.

8. The method of claim 7, wherein the scheduling scheme for the SCell is one of self-carrier scheduling and cross-carrier scheduling.

9. The method of claim 8, wherein when the primary duplex scheme is a TDD scheme, the secondary duplex scheme is an FDD scheme, and the scheduling scheme for the SCell is self-carrier scheduling, the format of downlink control information constituting the control information includes a downlink assignment index (DAI) field for downlink and a four-bit hybrid automatic repeat request (HARQ) process field, and the format of uplink control information constituting the control information includes a downlink assignment index (DAI) field for uplink.

10. The method of claim 8, wherein when the primary duplex scheme is an FDD scheme, the secondary duplex scheme is a TDD scheme, and the scheduling scheme for the SCell is cross-carrier scheduling, the format of downlink control information constituting the control information includes a three-bit hybrid automatic repeat request (HARQ) process field, and the format of uplink control information constituting the control information includes an uplink index field.

11. A base station supporting a high-rate data service for a primary cell (PCell) and a secondary cell (SCell), the base station comprising:
a scheduler scheduling communication of an uplink/down physical channel; and
a transmitter configuring control information under control of the scheduler and transmitting the configured control information through a control channel constituting the downlink physical channel, wherein the scheduler determines a format of the control information considering a primary duplex scheme supported in the PCell area and a secondary duplex scheme supported in the SCell area, and wherein the primary duplex scheme and the secondary duplex scheme are one of a frequency division duplex (FDD) scheme and a time division duplex (TDD) scheme and are different from each other.

12. The base station of claim 11, wherein the scheduler further considers a scheduling scheme for the SCell when determining the format of the control information.

13. The base station of claim 12, wherein the scheduling scheme for the SCell is one of self-carrier scheduling and cross-carrier scheduling.

14. The base station of claim 13, wherein the scheduler, when the primary duplex scheme is a TDD scheme, the secondary duplex scheme is an FDD scheme, and the scheduling scheme for the SCell is self-carrier scheduling, performs scheduling so that the format of downlink control information constituting the control information includes a downlink assignment index (DAI) field for downlink and a four-bit hybrid automatic repeat request (HARQ) process field and performs scheduling so that the format of uplink control information constituting the control information includes a downlink assignment index (DAI) field for uplink.

15. The base station of claim 13, wherein the scheduler, when the primary duplex scheme is an FDD scheme, the secondary duplex scheme is a TDD scheme, and the scheduling scheme for the SCell is cross-carrier scheduling, performs scheduling so that the format of downlink control information constituting the control information includes a three-bit hybrid automatic repeat request (HARQ) process field and performs scheduling so that the format of uplink control information constituting the control information includes an uplink index field.

16. A terminal, comprising:
a receiver receiving control information through a downlink control channel; and
a controller scheduling at least one of a downlink data channel and an uplink data channel based on the received control information, wherein a format of the control information is determined according to a duplex scheme supported in a primary cell (PCell) area and a duplex scheme supported in a secondary cell (SCell), and wherein the PDSCH and the secondary duplex scheme are one of a frequency division duplex (FDD) scheme and a time division duplex (TDD) scheme and are different from each other.

17. The terminal of claim 16, wherein the format of the control information is determined further considering a scheduling scheme for the SCell.

18. The terminal of claim 17, wherein the scheduling scheme for the SCell is one of self-carrier scheduling and cross-carrier scheduling.

19. The terminal of claim 18, wherein when the primary duplex scheme is a TDD scheme, the secondary duplex scheme is an FDD scheme, and the scheduling scheme for the SCell is self-carrier scheduling, the format of downlink control information constituting the control information includes a downlink assignment index (DAI) field for downlink and a four-bit hybrid automatic repeat request (HARQ) process field, and the format of uplink control information constituting the control information includes a downlink assignment index (DAI) field for uplink.

20. The terminal of claim 18, wherein when the primary duplex scheme is an FDD scheme, the secondary duplex scheme is a TDD scheme, and the scheduling scheme for the SCell is cross-carrier scheduling, the format of downlink control information constituting the control information includes a three-bit hybrid automatic repeat request (HARQ) process field, and the format of uplink control information constituting the control information includes an uplink index field.
